# EUROPEAN PATENT APPLICATION

(11) **EP 1 103 524 A2**
(43) Date of publication of application: **30.05.2001**
(21) Application number: 00125992.8
(22) Date of filing: 28.11.2000
(51) Int. Cl.: C01B 33/158, G10K 11/162

(54) **Method of drying wet silica gel**

(30) Priority: 29.11.1999 JP 33828199; 10.12.1999 JP 35235299
(71) Applicant: Matsushita Electric Industrial Co., Ltd., Kadoma-shi, Osaka 571-8501 (JP)
(72) Inventor: Hashida, Takashi, Osaka-shi, Osaka 536-0017 (JP); Suzuki, Masaaki, Osaka-shi, Osaka 536-0021 (JP)
(74) Representative: Leson, Thomas Johannes Alois, Dipl.-Ing.

(57) **Abstract**

The present invention is directed to a method of drying a wet silica gel containing water in a pore thereof comprising the steps of: silylating the wet silica gel in a water-soluble solvent to obtain hydrophobic wet silica gel; and drying the hydrophobic wet silica gel in an atmosphere having temperature and pressure of lower than a critical point of a liquid contained in the pores of the wet silica gel. Such a drying method effectively dries the wet silica gel without carrying out the time- and labor-consuming substitution of a solvent in the hydrophobing process.

## Description

### BACKGROUND OF THE INVENTION

The present invention relates to a method of drying a wet silica gel that is used for a heat insulation material, a sound absorbing material, and a catalyst carrier.

Silica gel has conventionally been used for a heat insulation material, a sound absorbing material, and a catalyst carrier and is generally desired to have a greater surface area and a lower density.

The wet silica gel is disadvantageously contracted by means of the capillary force in the pores thereof in the drying process. Two methods are mainly known to prevent the contraction in the drying process.

The first method is the supercritical drying method. This method dries the wet silica gel at a pressure and a temperature that are not lower than the critical point of the liquid contained in the wet silica gel, so that no gas-liquid interface is formed in the drying process. This does not cause the capillary force and enables the wet silica gel to be dried without contraction. This supercritical drying method was developed by Kistler as the method utilizing the supercritical drying process of an alcohol (see Journal of Physical Chemistry, Vol. 36, pp52-64, 1932) and modified by Hunt et at. To the supercritical drying method using carbon dioxide (see US Patent No. 4,610,863).

The second method makes the surface of the gel hydrophobic to reduce the capillary force before the drying process (see US Patent No. 3,015,645, Journal of Non-Crystalline Solid Vol. 186, pp104-112, 1995).

However, the supercritical drying method requires the high pressure conditions for drying, thus raising the required cost for equipment.

The second method of hydrophobing the gel does not require the expensive equipment but uses a water-insoluble compound, such as a chlorosilane compound or a disilazane compound, for hydrophobing. It is accordingly required to replace the liquid contained in the pores of the gel with a solvent that is compatible with the water-insoluble compound, prior to the hydrophobing process. This undesirably lengthens the whole series of the processing and results in the poor efficiency of production.

Thus, an object of the present invention is to solve the drawbacks of the prior art techniques and to provide a method of drying a wet silica gel that does not follow the known supercritical drying method nor require the time- and labor-consuming substitution of a solvent in the hydrophobing process.

### BRIEF SUMMARY OF THE INVENTION

At least part of the above and the other related objects is attained by a method of drying a wet silica gel containing water in the pore thereof. The method comprises the steps of: (a) silylating the wet silica gel in a water-soluble solvent to obtain a hydrophobic wet silica gel; and (b) drying the hydrophobic wet silica gel in an atmosphere having temperature and pressure of lower than a critical point of a liquid contained in the pore of the wet silica gel.

It is preferable that the water-soluble solvent includes at least one selected from the group consisting of methanol, ethanol, propanol, tert-butyl alcohol, and acetone.

More specifically it is preferable that the water-soluble solvent includes n-propyl alcohol.

It is also preferable that the water-soluble solvent includes a surface active agent.

In accordance with one preferable application of the present invention, the method further includes the step of substituting a solvent after the hydrophobing step (a) but before the drying step (b).

In accordance with another preferable application of the method of the present invention, the step (b) includes the steps of: (b1) regulating the pressure of the atmosphere to be not lower than (P₀ + 0.1)MPa but not higher than {P₀ + 0.4(P_{c}-P₀)}MPa, where P₀ represents the atmospheric pressure and P_{c} represents the critical pressure of the liquid; and (b2) regulating the temperature of the atmosphere to be not lower than (T_{bp} + 30)°C but not higher than {T_{bp} + 2/3(T_{c}-T_{bp})}°C, where T_{bp} represents the boiling point of the liquid and T_{c} represents the critical temperature of the liquid.

The pressure regulating step (b1) and the temperature regulating step (b2) may be carried out in any order including the simultaneous regulation.

More specifically it is preferable that the step (b1) regulates the pressure of the atmosphere to be not lower than (P₀ + 0.4)MPa but not higher than {P₀ + 0.25(P_{c}-P₀)}MPa, and the step (b2) regulates the temperature of the atmosphere to be not lower than (T_{bp} + 50)°C but not higher than (T_{bp} + 1/2(T_{c}-T_{bp})}°C.

In the pressure regulating step (b1), a pressurized inert gas may be used to regulate the pressure. In this case, it is preferable that the inert gas includes at least one of nitrogen and carbon dioxide.

Using a supply of steam is desired since the steam is used to regulate both the pressure and the temperature.

It is preferable that the liquid has a surface tension of not greater than 0.016 N/m at the boiling point.

More specifically the liquid includes either one of pentane and hexane as a primary component.

It is also preferable that the liquid includes either one of a linear hydrocarbon compound having a boiling point of not lower than 120°C and a siloxane compound having a boiling point of not lower than 90°C as a primary component.

In accordance with one preferable embodiment of the present invention, the step (b) includes the steps of: (b3) pressurizing the wet silica gel in the state of slurry to vaporize the liquid contained in the pores of the wet silica gel and obtain a substantially dried body of the silica gel; (b4) conveying the substantially dried body of the silica gel to a dried gel collector unit by utilizing a volume expansion of the liquid due to the vaporization; and (b5) reducing pressure of an atmosphere in the dried gel collector unit to be not higher than the atmospheric pressure, so as to remove the liquid vapor.

The present invention is also directed to a heat insulating panel and a sound absorbing panel that is mainly composed of a dried silica gel prepared according to the method of drying wet silica gel discussed above.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWINGS

Fig. 1 is a flowchart showing a method of drying a wet silica gel according to the present invention;
Fig. 2 is a flowchart showing a prior art method of drying a wet silica gel;
Fig. 3 is a graph showing the temperature dependence of the surface tension and the vapor pressure of benzene;
Fig. 4 schematically illustrates main part of one drying apparatus following the method of drying wet a silica gel according to the present invention; and
Fig. 5 schematically illustrates main part of another drying apparatus following the method of drying a wet silica gel according to the present invention.

### DETAILED DESCRIPTION OF THE INVENTION

The method of drying the wet silica gel according to the present invention is described with drawings.

The method of the present invention is characterized by the arrangement of making the wet silica gel hydrophobic (hereinafter this process is referred to as "hydrophobing") not via the step of substituting a solvent but directly and thus allowing the wet silica gel to be dried not by the supercritical drying method but under the conditions of the temperature and the pressure that are lower than the critical point.

Especially important is the direct hydrophobing process (that is, the step (a)). The following describes the details of the step (a).

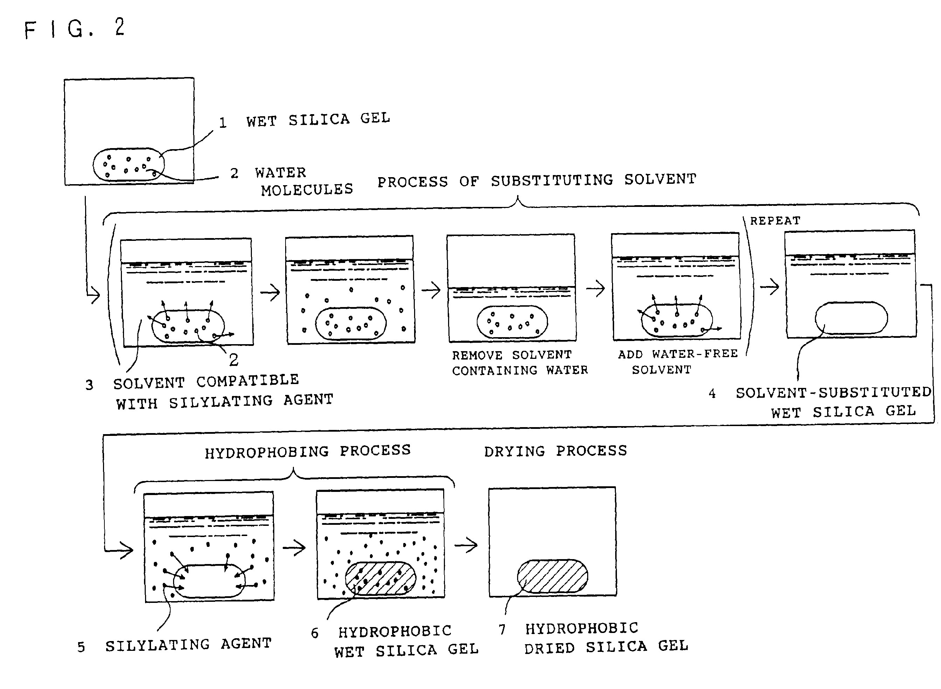

As described later, the resulting wet silica gel generally contains water in the pore(s) thereof, because of the restrictions of the form of the material. The prior art technique carries out the process of substituting a solvent, before the hydrophobing process. As shown in Fig. 2, the substitution process replaces water (water molecules) 2 contained in a wet silica gel 1 with a solvent 3, that is compatible with a silylating agent (a hydrophobing agent), such as a hydrocarbon. This gives a solvent-substituted wet silica gel 4. The prior art technique then adds a silylating agent 5 to the solvent-substituted wet silica gel 4 to make the silylating agent 5 chemically react with the silanol group on the surface of the wet silica gel and thereby introduce the alkylsilyl group. This gives a hydrophobic wet silica gel 6 (containing the solvent that is compatible with the silylating agent). The hydrophobic wet silica gel 6 is dried to a hydrophobic dried silica gel 7. This is because the hydrophobing agent is insoluble in water and does not enter the wet silica gel filled with water, thus not allowing the surface of the wet silica gel to be made hydrophobic.

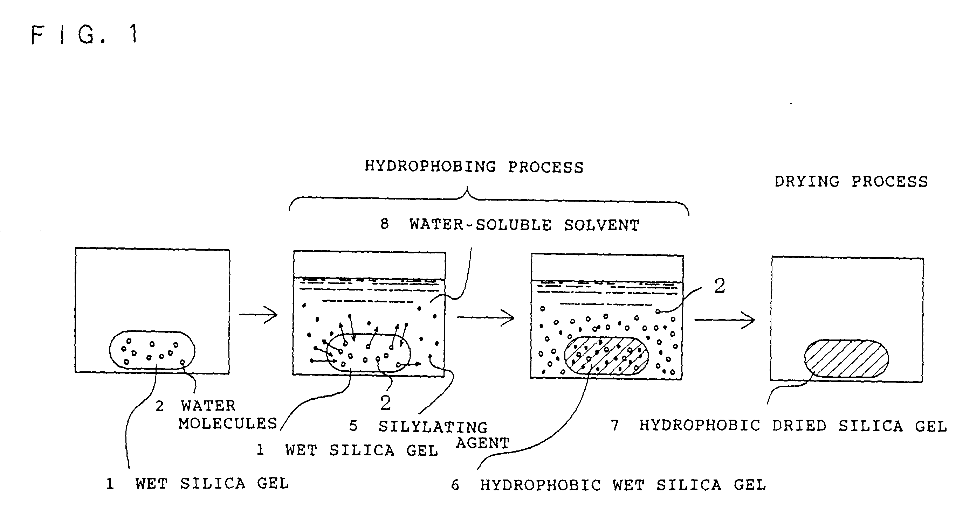

The technique of the present invention is different from the prior art method of drying the wet silica gel shown in Fig. 2 and does not include the process of substituting the solvent. As shown in Fig. 1, the technique of the present invention first soaks a wet silica gel 1 containing water in a solution mixture of a water-soluble solvent 8 and a silylating agent 5 to make the wet silica gel 1 contain the solution mixture of the water-soluble solvent, the silylating agent, and water with a view to hydrophobing. The silylating agent 5 included in the solution mixture reaches the surface of the wet silica gel. This arrangement introduces the alkylsilyl group without the replacement with the solvent that is compatible with the silylating agent 5, and gives a hydrophobic wet silica gel 6 (containing the water-soluble solvent and water). The hydrophobic wet silica gel 6 is then dried to hydrophobic dried silica gel 7. This procedure ensures the enhanced efficiency of producing the dried silica gel.

A water-soluble organic solvent is preferably used for the water-soluble solvent in the present invention. The silylating agent may be added after the wet silica gel is soaked in the water-soluble organic solvent.

When any of a disilazane compound, a chlorosilane compound, and an alkoxysilane compound is used for the silylating agent, the silylating agent is hydrolyzed to form a corresponding alkylsilanol and react with the silanol group on the surface of the silica gel.

When an alkylsilanol is used for the silylating agent, the silylating agent directly reacts with the silanol group on the surface of the silica gel. Addition of a water-soluble organic solvent, such as an alcohol, decreases the surface tension of the aqueous solution and lowers the capillary force, thus desirably preventing contraction of the silica gel.

Typical examples of the silylating agent used in the present invention include chlorosilane compounds such as trimethylchlorosilane, methyltrichlorosilane, and dimethyldichlorosilane, silazane compounds such as hexamethyldisilazane, alkoxysilane compound such as methoxytrimethylsilane, ethoxytrimethylsilane, dimethoxydimethylsilane, dimethoxydiethylsilane, and diethoxydimethylsilane, and silanol compounds such as trimethylsilanol and triethylsilanol.

These silylating agents introduce the alkylsilyl group, such as the trimethylsilyl group, on the surface of the skeleton of the silica gel, so as to give the hydrophobicity.

Using a fluorinated silylating agent for the hydrophobing agent enhances the hydrophobicity of the resulting silica gel and is thus very effective. Chlorosilanes having the perfluoroalkyl group are preferable examples.

Typical examples of the water-soluble organic solvent used in the present invention include methanol, ethanol, propanol, acetone, tert-butyl alcohol. These organic solvents have relatively low boiling points and are thus readily dried. Another advantage of these organic solvent is the easy availability.

Other available examples for the water-soluble organic solvent include ethers such as 1,3-dioxolane, 1,4-dioxane, and tetrahydrofuran and carboxylic acids such as formic acid, acetic acid, and propionic acid. The acid or alcohol used in the drying process at high temperatures may react with the silanol group on the surface of the silica gel to enhance the hydrophobicity.

Among the water-soluble organic solvents listed above, especially preferable are n-propyl alcohol, isopropyl alcohol, and tert-butyl alcohol. These solvents have the surfactant-like functions and thereby even a little quantity effectively decreases the surface tension of the aqueous solution. For example, addition of 10% by mole of n-propyl alcohol decreases the surface tension from 0.076 N/m to 0.025 N/m.

The concentration of the silylating agent relative to the water-soluble organic solvent is preferably not greater than 5% by weight or more specifically not greater than 2% by weight. As described previously, any of the disilazane compound, the chlorosilane compound, and the alkoxysilane compound reacts with water to form a corresponding alkylsilanol. The alkylsilanol of the high concentration is condensed to a disiloxane compound, which loses the function as the silylating agent. The excessively low concentration, however, does not exert the sufficient effects of hydrophobing. It is accordingly preferable that the silylating agent has the relative concentration of not less than 0.5% by weight.

In the drying process discussed later, in the case where the boiling point of the water-soluble organic solvent is lower than the boiling point of water, the proportion of water contained in the liquid in the pores of the gel increases with the progress of drying. In this process, the surface tension of the liquid in the pores raises to cause contraction of the gel. In order to prevent such contraction, it is preferable to set the ratio of the quantity of water to the quantity of the water-soluble organic solvent in the pores equal to the corresponding vapor pressure ratio or to make the water-soluble organic solvent excess over the vapor pressure ratio.

In one example, isopropyl alcohol is used for the water-soluble organic solvent. The vapor pressure ratio of water to isopropyl alcohol is practically equal to 1 : 2. The presence of excess isopropyl alcohol contained in the liquid in the pores over the molar ratio of water to isopropyl alcohol = 1 : 2 effectively prevents an increase in surface tension in the drying process.

Because of little difference from the vapor pressure of water, n-propyl alcohol is preferable for the water-soluble organic solvent. The boiling point of n-propyl alcohol (97°C) is close to the boiling point of water (100°C), so that there is little difference in vapor pressure and in vaporization rate. As mentioned previously, another advantage of n-propyl alcohol is the significant effects of decreasing the surface tension of the aqueous solution. The required mole of n-propyl alcohol is substantially equal to the required mole of water. This accordingly reduces the required quantity of the water-soluble organic solvent used.

Addition of a surface active agent to the water-soluble solvent is advantageous, since the surface active agent further decreases the surface tension of the aqueous solution and lowers the capillary force. In the case of an insufficient quantity of the water-soluble organic solvent, the silylating agent may be separated from the water-soluble organic solvent in the hydrophobing process. Addition of a small quantity of the surface active agent enables formation of a substantially homogeneous emulsion and thus ensures the progress of the hydrophobing process.

The surface active agent may be added in the hydrophobing process or alternatively in the drying process.

Typical examples of the surface active agent used in the present invention include silicone surfactants, hydrocarbon surfactants, and fluorinated silicone surfactants and fluorinated hydrocarbon surfactants. These surface active agents include anionic, cationic, and nonionic ones. Especially preferable are fluorinated surface active agents because of their effects of significantly lowering the surface tension. For example, some fluorinated surface active agents having a perfluoroalkyl group lower the surface tension to be not higher than 0.02 N/m.

Addition of the surface active agent is effective not only in the water system but in the alcohol system, in which the liquid contained in the pores of the gel is an alcohol solution, and in the mixed system of water and a water-soluble organic solvent.

The silylating agent that is used for the hydrophobing process but does not react with the silanol group on the surface of the gel remains in the pores of the gel in the initial stage of the drying process. With the progress of the drying process, the remaining silylating agent is mostly vaporized and removed from the pores. A trace amount of the silylating agent may, however, still remain in the pores. A further increase in temperature after the drying process decomposes the remaining silylating agent to attain complete removal thereof.

In the case where the further increase in temperature is not desirable because of some specific reasons, the gel may be washed with a solvent that dissolves the silylating agent after the hydrophobing process. Even a simple wash is effective, and little silylating agent remains in the subsequent drying process. The solvent preferably used for the washing is capable of dissolving the silylating agent and has the low surface tension.

The wet silica gel, which is the object of the present invention, is manufactured from an alkoxysilane, colloidal silica, or water glass as the raw material.

In the case of using an alkoxysilane, for example, tetraethoxysilane, as the material, the procedure adds water and either an acid or an alkali to an alcohol solution of the alkoxysilane to hydrolyze and polycondense the alkoxysilane, and dehydrates the polycondensed alkoxysilane to yield wet a silica gel. In this case, a mixture of the alcohol and water is contained in the pores of the gel. When the resulting wet silica gel is washed with a water-ethanol mixed solution, a large mass of water remains in the pores.

The colloidal silica is generally dispersed in water. In this case, a large mass of water is contained in the pores of the wet silica gel.

In the case of using water glass as the material, the wet silica gel is obtained by treating an aqueous solution of alkali-silicate glass with an acid or by passing the aqueous solution through an ion exchange resin and subsequently adjusting pH. In this case, a large mass of water is contained in the pores of he wet silica gel.

The wet silica gel, to which the drying method of the present invention is applied, preferably has the skeleton of high strength to readily prevent the contraction.

The skeleton of the gel is generally reinforced by the aging process. The aging process keeps the wet silica gel with a catalyst in a solution containing a high concentration of a monomer for a predetermined time period. The wet silica gel is aged in an alkoxysilane or silicic acid.

It is preferable that the liquid kept in the pores of the wet silica gel has a small surface tension, since the small surface tension gives a small capillary force and advantageously prevents contraction. It is accordingly effective to add a solvent having a small surface tension in the drying process.

The drying step (b) is described in detail.

The drying process dries the wet silica gel, which has the hydrophobic surface by the hydrophobing process as shown in Fig. 1, in an atmosphere having the temperature and the pressure of lower than the critical point of the liquid contained in the pores of the wet silica gel, so as to obtain hydrophobic dried silica gel. The operations in this drying process are identical with those carried out in the prior art drying process.

In the drying process, the wet silica gel is dried under the conditions lower than the critical point of the liquid contained in the wet silica gel. The drying operation under the pressurized condition raises the boiling point of the liquid kept in the pores of the wet silica gel. The temperature rise lowers the surface tension and the capillary force, thereby effectively preventing contraction.

For example, in the case where ethanol is vaporized under the pressurized condition, an increase in boiling point of ethanol by approximately 80°C to about 150°C lowers the surface tension from approximately 0.018 N/m to approximately 0.012 N/m and thus effectively prevents contraction.

The following describes the drying method under the pressurized condition.

The capillary force acts to cause contraction of the pores in the course of drying the wet silica gel. The capillary force increases in proportion to the surface tension of the liquid contained in the pores of the wet silica gel. In order to prevent the contraction, it is thus important to lower the surface tension.

The surface tension decreases with an increase in temperature. The temperature on the surface of the liquid does not rise over the boiling point of the liquid. An increase in pressure of the atmosphere is accordingly critical to raise the boiling point of the liquid.

The inventors of the present invention have found that regulating the pressure and increasing the temperature in the above manner lowers the surface tension and the capillary force and thereby effectively prevents contraction of the wet silica gel, and have completed the present invention.

With regard to benzene as a typical example of the liquid present in the pores of the wet silica gel, the general relationship between the temperature, the vapor pressure, and the surface tension is described with the drawing. The similar tendency is found in other liquids.

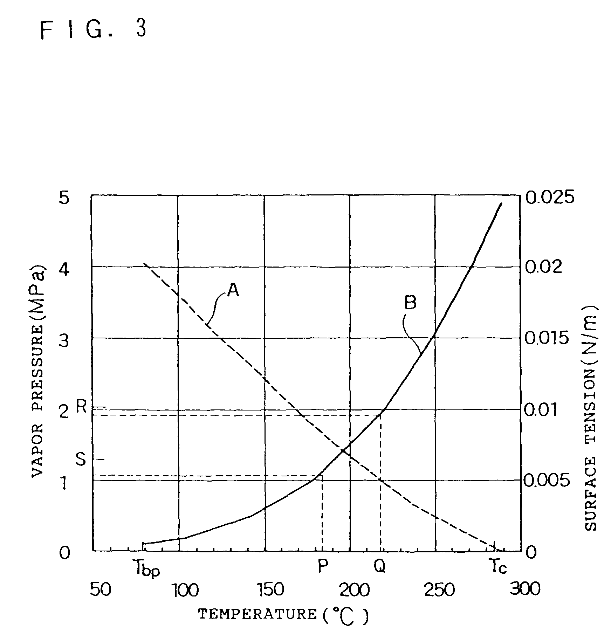

In the graph of Fig. 3, a curve A represents a variation in surface tension, and a curve B represents a variation in vapor pressure. Benzene has the boiling point (T_{bp}) of 80.1°C and the critical temperature (T_{c}) of 289°C. The atmospheric pressure (P₀) is 0.1013 MPa and the critical pressure (P_{c}) of benzene is 4.898 MPa.

In order to raise the temperature on the surface of the liquid to a preset level, it is required to increase the ambient pressure to the vapor pressure corresponding to the preset temperature while raising the ambient temperature. As shown in Fig. 3, with an increase in temperature, the vapor pressure gradually rises in the initial stage and then abruptly increases. The surface tension decreases at a substantially fixed rate with the increase in temperature, although the decreasing slope is a little steeper in the initial stage. Namely there is a difference in temperature dependence between the surface tension and the vapor pressure.

The present invention pays attention to the difference in temperature dependence and regulates the ambient temperature and the ambient pressure of the atmosphere to attain a less increase in vapor pressure relative to a temperature variation, so as to prevent contraction of the wet silica gel in the drying process.

As clearly understood from the graph of Fig. 3, the vapor pressure curve has a relatively gentle rising slope in the temperature range from the boiling point (T_{bp}) via {T_{bp} + 1/2(T_{c}-T_{bp})}(point P) to {T_{bp} + 2/3(T_{c}-T_{bp})}(point Q). The pressure increase in this temperature range is almost 40% of the total pressure rise from the atmospheric pressure to the critical pressure of the liquid. There is accordingly little danger in this range.

When the temperature and the pressure of the atmosphere fulfill the above conditions, the surface tension is lowered to approximately one quarter of the level at the boiling point. A further increase in ambient temperature, compared to ambient pressure does not cause a significant decrease in surface tension of the liquid.

In the atmosphere having the pressure of at least 0.2 MPa and the temperature that is higher than the boiling point of the liquid contained in the pores of the wet silica gel by at least 30°C, the surface tension is lowered by at least 10% (0.002 to 0.003 N/m) of the surface tension range 0.02 to 0.03 N/m of the standard organic solvents. Such a significant decrease in surface tension effectively prevents contraction of the wet silica gel.

Based on the above discussion, the method of drying the wet silica gel, which contains the liquid in the pores thereof, according to the present invention regulates the pressure and the temperature of the atmosphere to the following conditions:

### (Condition 1)

Pressure: not lower than (P₀ + 0.1)MPa
   not higher than (P₀ + 0.4(P_{c}-P₀)}MPa; and
Temperature:not lower than (T_{bp} + 30)°C
   not higher than {T_{bp} + 2/3(T_{c}-T_{bp})}°C.

More preferably the pressure and the temperature are regulated to the following conditions:

### (Condition 2)

Pressure: not lower than (P₀ + 0.4)MPa
   not higher than {P₀ + 0.25(P_{c}-P₀)}MPa; and
Temperature:not lower than (T_{bp} + 50)°C
   not higher than {T_{bp} + 1/2(T_{c}-T_{bp})}°C.

Such regulation decreases the surface tension to at least half the level at the boiling point, while the pressure increase is only one quarter of the total pressure increase from the atmospheric pressure to the critical pressure (P_{c}) of the liquid. The significant decrease in surface tension effectively prevents contraction of the wet silica gel.

In the graph of Fig. 3, {P₀ + 0.4(P_{c}-P₀)}MPa is shown by point R, and {P₀ + 0.25(P_{c}-P₀)}MPa is shown by point S.

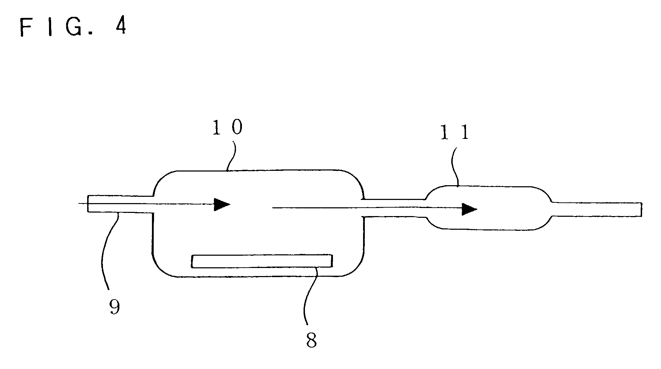

Referring to Fig. 4, a typical example following the method of drying the wet silica gel according to the present invention is described. Fig. 4 schematically illustrates the structure of a drying apparatus following the drying method of the present invention. The drying apparatus shown in Fig. 4 includes a heating vaporization unit 10, which has a pressurized gas supply conduit 9 and is connected with a condenser 11.

A wet silica gel 8 is introduced in the heating vaporization unit 10. A supply of heated, pressurized gas is fed to the heating vaporization unit 10 via the pressurized gas supply conduit 9 to regulate the pressure and the temperature of the atmosphere. This keeps the inside of the heating vaporization unit 10 in the pressurized and heated conditions. The wet silica gel 8 is accordingly heated to vaporize and release the liquid contained in the pores of the wet silica gel 8.

The liquid vapor is discharged together with the pressurized gas from the heating vaporization unit 10, and is introduced into the condenser 11 for liquefaction and removal. Namely the pressurized gas functions as a carrier to carry the liquid vapor away.

The pressure and the temperature in the heating vaporization unit 10 are regulated by adjusting the pressure and the flow rate of the pressurized gas and by directly heating the heating vaporization unit 10.

The pressurized gas may continuously be fed to the heating vaporization unit 10. Another applicable procedure initially supplies the heated, pressurized gas to the heating vaporization unit 10 to make the atmosphere in the heated and pressurized conditions, and subsequently closes the pressurized gas supply conduit 9 for the drying process. A back-pressure valve may be provided on the rear face of the heating vaporization unit 10 according to the requirements.

When a sufficient quantity of a liquid is present in the heating vaporization unit 10, the vaporized liquid adds the pressure. The supply of the pressurized gas and the pressurized gas supply conduit 9 may thus be omitted from the arrangement. The condenser 11 may be omitted when the recovery of the liquid contained in the pores of the wet silica gel is not required.

A heat exchange unit may be used to enhance the thermal efficiency of the drying apparatus, and the pressurized gas may be recycled. The wet silica gel may have any form, such as granular, powdery, or block. Although being omitted from the illustration of Fig. 4, the inside of the heating vaporization unit 10 may be stirred to enhance the drying efficiency.

An inert gas is preferably used for the pressurized gas, because of less inflammability. It is especially preferable to use at least one of nitrogen and carbon dioxide, because of the low cost.

The pressurized gas is not restricted to the gas form at ordinary temperature, but may be the liquid form at ordinary temperature, which is vaporized by heating. The volume of the gas significantly decreases by liquefaction. The use of such a liquid thus advantageously reduces the required size of the drying apparatus. Available examples of the gas that is vaporized by heating include hydrocarbons such as hexane and heptane, alcohols such as methanol, ethanol, and propanol, ketones such as acetone and methyl ethyl ketone, and other general organic solvents.

In this case, because of less inflammability, it is preferable to heat and vaporize an incombustible liquid, such as water, and use it as the pressurized gas (hereinafter the fluid that functions as the pressurized gas by heating may be referred to as the "pressurized fluid").

Easy separation of the liquid contained in the gel from the pressurized gas in the cooling process is preferable for the purpose of recycle. In one preferable example, water (steam) is used for the pressurized fluid, and the liquid contained in the wet silica gel is a water-insoluble organic solvent like a hydrocarbon.

The liquid kept in the pores of the wet silica gel may be water or an organic solvent like an alcohol or a hydrocarbon. The liquid may be replaced by another solvent.

The wet silica gel is produced by the sol-gel method from any of water glass, alkoxysilanes, for example, tetramethoxysilane and tetraethoxysilane, oligomers thereof, and colloidal silica as the material.

The method of drying the wet silica gel according to the present invention effectively reduces the capillary force. Application of this method to the conventional procedure enables the wet silica gel to be dried sufficiently, even when the hydrophobing process carried out to decrease the capillary force and the process for enhancing the strength of the gel skeleton are insufficient. Namely the arrangement of the present invention favorably shortens the time required for such processes. The method of the present invention dries the wet silica gel at the higher temperature than the ordinary level and thus shortens the time required for drying.

The liquid having the small surface tension is advantageously used for the liquid kept in the pores of the wet silica gel, since the small surface tension prevents contraction.

Concrete examples include hydrocarbons containing no functional groups, fluorinated hydrocarbons, ethers, alcohols, alkylsilanes, dimethyl polysiloxanes, and other silicon compounds.

Especially preferable are liquids having the surface tension of not greater than 0.016 N/m at the respective boiling points. The liquids satisfying this condition include non-cyclic hydrocarbons, such as decane, nonane, octane, heptane, hexane, pentane, and butane, and isomers thereof.

Other available examples include hydrofluorocarbons (HFC) such as HFC-134a, HFC-152a, and octafluorocyclopentane, hydrofluoro ethers (HFE) such as nonafluorobutyl methyl ether and nonafluorobutyl ethyl ether, fluoroalcohols such as hexafluoroisopropyl alcohol, alkylsilanes such as tetramethylsilane, and dimethyl polysiloxanes such as hexamethyldisiloxane, hexamethylcyclotrisiloxane, and octamethyltrisiloxane.

Pentane, hexane, or petroleum ether, which is the mixture of pentane and hexane as primary components are especially preferable since they are readily available, have adequate vapor pressures at room temperature to ensure easy handling, and do not require a large quantity of energy for vaporization because of the smaller heat of vaporization.

The wet silica gel has a high heat resistance and does not easily swell, so that the liquid having a high boiling point may be used. The liquid having the higher boiling point generally has the lower critical pressure and accordingly has a smaller increase in vapor pressure with an increase in temperature. For example, the critical pressure decreases in the sequence of pentane: 3.37 MPa, hexane: 3.05 MPa, heptane: 2.74 MPa, octane: 2.49 MPa, and nonane: 2.32 MPa. The use of the liquid having the higher boiling point attains the sufficient decrease in surface tension under the lower pressure.

Linear hydrocarbons having the non-cyclic structure and the boiling point of not lower than 120°C are preferably used since they have the smaller surface tension. Among the siloxanes having the lower surface tension than the hydrocarbons, those having the boiling point of not lower than 90°C are preferably used; for example, hexamethyldisiloxane, hexamethylcyclotrisiloxane, and octamethyltrisiloxane. Especially preferable are hydrocarbons having the high boiling point, such as heptane and octane, because of their easy availability.

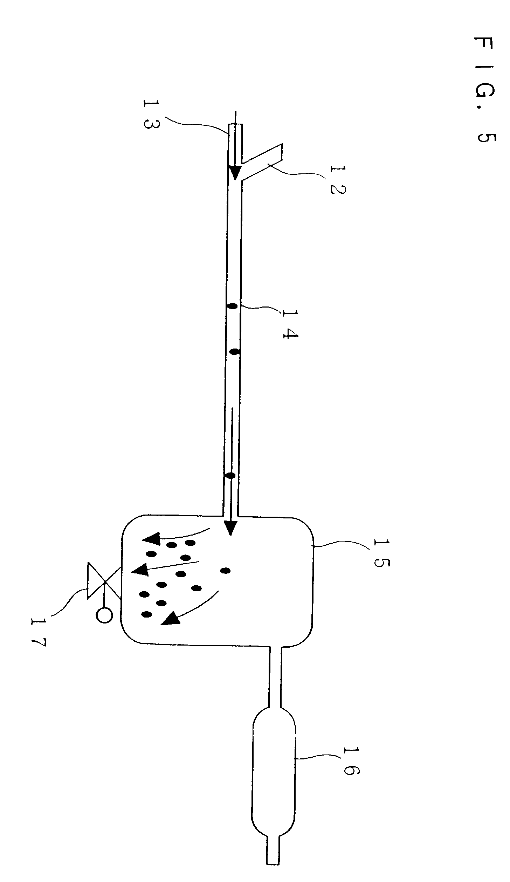

Another application of the method of drying the wet silica gel under the pressurized condition according to the present invention is described with referring to Fig. 5. Fig. 5 schematically illustrates the structure of another drying apparatus following the drying method of the present invention. In the drying apparatus of Fig. 4, the heating vaporization unit 10 is used for both vaporization of the liquid and removal of the liquid vapor with the pressurized gas. In the drying apparatus of Fig. 5, on the other hand, a heating vaporization unit 14 vaporizes the liquid kept in the pores of the wet silica gel, whereas a dried gel collector unit 15 separates the liquid vapor. In this arrangement, the vaporization and the separation are performed at physically different positions. This arrangement of the drying apparatus shown in Fig. 5 enables only the process of vaporizing the liquid contained in the pores of the wet silica gel to be carried out in the pressurized atmosphere, while the process of removing the liquid vapor is performed in the reduced pressure.

In accordance with a concrete procedure, a slurry gel including the wet silica gel is supplied from a slurry gel supply conduit 12 by means of a pressure pump. A supply of pressurized fluid may be fed from a pressurized gas supply conduit 13 for the purpose of regulating the pressure. The supplies of the supply gel and the pressurized fluid give the total pressure of 0.2 MPa or higher. The flow of the slurry gel and the pressurized fluid through the heating vaporization unit 14 heats the wet silica gel and practically completes the vaporization of the liquid kept in the wet silica gel in the middle of the heating vaporization unit 14.

Most of the pressure increase due to the vaporization of the liquid is absorbed by the volume expansion from the heating vaporization unit 14 to the dried gel collector unit 15. The wet silica gel and the liquid vapor abruptly increase the moving speed and shift to the dried gel collector unit 15 at the high speed.

The dried gel collector unit 15 is evacuated with a vacuum pump. The dried gel collector unit 15 and adjoining part of the heating vaporization unit 14 are thus kept under the reduced pressure. The liquid vapor released from the wet silica gel is sucked with the vacuum pump and condensed in a condenser 16 for separation.

In this arrangement, the wet silica gel itself is supplied under the high pressure. No pressurized fluid is thus required, or only a small quantity of the pressurized fluid is sufficient. The decrease in required volume of the pressurized fluid advantageously reduces the size of the drying apparatus.

Any of the pressurized fluids applicable for the drying apparatus shown in Fig. 4 may be used in the drying apparatus of Fig. 5.

The dried gel obtained by the method of drying the wet silica gel according to the present invention may be used to manufacture heat insulating panels and sound absorbing panels at low manufacturing cost. The technique of the present invention does not require the processing under the high pressure like the supercritical conditions, and shortens the time required for the aging and hydrophobing processes, thus advantageously reducing the total manufacturing cost. The dried gel in the granulated form is preferable since the particles are readily packed to any shape and in any narrow part.

The hydrophobing process effectively prevents the deterioration of the thermal insulating property and the sound absorbing property due to absorption of water. The slurry gel is dried in the drying apparatus of Fig. 5. In this case, the dried gel has the granulated form, and there is no requirement of the subsequent crushing process.

The present invention is described more with concrete examples, although the present invention is not restricted to these examples in any sense. The drying method of the present invention is applicable to any wet silica gel keeping water in pores therein and ensures the same effects under the conditions of the same gel skeleton and the same liquid.

The principle of the present invention is thus not restricted to the gel materials and the synthesizing processes described in the examples.

### Example 1 and Comparative Example 1

Example 1 used a wet silica gel, which was produced from water glass as the material and kept water in the pores thereof. The silica gel was made hydrophobic in acetone using trimethylchlorosilane as the silylating agent and dried the hydrophobic wet silica gel with hot blast under the atmospheric pressure.

First, water glass including Na₂O and SiO₂ at the molar ratio of 1 to 3 was diluted with water to make the concentration of SiO₂ equal to 8% by weight to obtain an aqueous solution, and the obtained aqueous solution was passed through a strong acid-type cation exchange resin (styrene-divinylbenzene copolymer) to pH 2.3. The pH of the processed aqueous solution was then adjusted to 7 by addition of aqueous ammonia. The gelation proceeded to give wet silica gel containing water in the pores thereof.

Then, an acetone solution was prepared in which 10% by weight of trimethylchlorosilane was dissolved. The wet silica gel was soaked in the acetone solution. The molar ratio of water to acetone in the wet silica gel was approximately 1 : 5. The acetone solution with the wet silica gel soaked therein was then left in the atmosphere of 45°C for 24 hours for hydrophobing.

After the hydrophobing process, the wet silica gel was dried with the current of nitrogen gas of 100°C under the atmospheric pressure. The density of the resulting dried silica gel was measured (Example 1).

On the other hands, water kept in the pores of the wet silica gel of Example 1 before the hydrophobing process was replaced with acetone in 24 hours, further the acetone was replaced with hexane in another 24 hours, and the solvent-substituted wet silica gel was soaked in a hexane solution containing 5% by weight of trimethylchlorosilane at 45°C for hydrophobing.

The wet silica gel was dried in the same manner as Example 1, and the density of the dried silica gel was measured (Comparative Example 1).

The observed density of the dried silica gel of Example 1 was 250 kg/m³, and that of the dried silica gel of Comparative Example 1 was 230 kg/m³. There was no significant difference. The procedure of Example 1 did not require the replacement of the solvent, while the procedure of Comparative Example 1 required 48 hours for the replacement of the solvent.

The hydrophobing process carried out in the water-soluble solvent significantly enhances the efficiency of producing the dried silica gel.

### Example 2

In Example 2, the wet silica gel obtained from water glass, which was identical with that used in Example 1, was used. The procedure of Example 2 used isopropyl alcohol for the water-soluble solvent in the hydrophobing process and methoxytrimethylsilane as the silylating agent.

An aqueous solution, in which 1.0% by weight of methoxytrimethylsilane was dissolved in a solvent mixture including water and isopropyl alcohol at the molar ratio of 1 : 1.5, was prepared and the wet silica gel was soaked in the aqueous solution to leave the aqueous solution with the wet silica gel soaked therein at 45°C for 24 hours for hydrophobing. In the hydrophobing process, the pH of the aqueous solution was adjusted to approximately 5.5 by addition of acetic acid.

After the hydrophobing process, the wet silica gel was dried with the current of nitrogen gas of 100°C under the atmospheric pressure.

The observed density of the resulting dried silica gel was the sufficiently low level, 320 kg/m³.

### Example 3

Example 3 used n-propyl alcohol in place of isopropyl alcohol of Example 2. The aqueous solution used in the hydrophobing process was adjusted to contain water and n-propyl alcohol at the molar ratio of 1 : 1. The hydrophobing process and the drying process were carried out otherwise in the same manner as those of Example 2.

The observed density of the resulting dried silica gel was 240 kg/m³, which was lower than that of Example 2. This may be ascribed to the following reason.

The vapor pressure ratio of isopropyl alcohol to water is approximately 1 : 2. Vaporization of isopropyl alcohol is thus completed in a shorter time substantially corresponding to this ratio. The actual molar ratio in the aqueous solution used in Example 2 was, however, 3 : 2. The proportion of water accordingly increased in the latter stage of the drying process to raise the surface tension and thereby capillary force. n-Propyl alcohol, on the other hand, has a substantially similar vapor pressure to that of water, so that the proportion of water did not vary to increase the surface tension in the whole drying process.

### Example 4 and Comparative Example 2

In Example 4, a surface active agent was added in the hydrophobing process.

The wet silica gel keeping water in the pores thereof was prepared in the same manner as Example 1. Then, an aqueous solution was prepared by adding 1.0% by weight of methoxytrimethylsilane and 0.1% by weight of a fluorine surface active agent FC135 (manufactured by 3M Corporation, US) to a mixture solvent of water and isopropyl alcohol at the molar ratio of 1 : 1.7. The wet silica gel was soaked in the aqueous solution. The pH of the aqueous solution was adjusted to approximately 5.5 by addition of acetic acid. The aqueous solution with the wet silica gel soaked therein was left in the atmosphere of 45°C for 24 hours for hydrophobing. After the hydrophobing process, the wet silica gel was dried with the current of nitrogen of 120°C under the atmospheric pressure (Example 4).

On the other hands, the hydrophobing process and the drying process were carried out in the same manner as Example 4 to give a dried silica gel (Comparative Example 2), except that the fluorine surface active agent was not added.

The observed density of the dried silica gel of Example 4 was 230 kg/m³, and that of the dried silica gel of Comparative Example 2 was 290 kg/m³.

The difference is ascribed to the reason discussed in Example 3. The vapor pressure ratio of isopropyl alcohol to water is approximately 1 : 2. The isopropyl alcohol in the aqueous solution used in Example 2, however, had the smaller content than this ratio. The proportion of water accordingly increased in the latter stage of the drying process to raise the surface tension. Compared with the dried silica gel of Example 4, the dried silica gel of Comparative Example 2 has the higher degree of contraction and thereby the higher density. While the proportion of isopropyl alcohol decreased similarly in the latter stage of the drying process in Example 4, the presence of the surface active agent kept the surface tension sufficiently low to prevent the contraction.

### Example 5

In Example 5, the hydrophobing process and the drying process were carried out in the same manner as Example 1, except that trimethylsilanol was used for the silylating agent in place of trimethylchlorosilane. The resulting dried silica gel had the low observed density equivalent to that of Example 1.

This experiment shows that using the silanol compound ensures the same effects as those in the case of using the chlorosilane compound.

### Example 6

In Example 6, the wet silica gel was dried with hot blast in the pressurized atmosphere in the drying process.

There were used the same wet silica gel keeping water in the pores thereof as that of Example 1, ethoxytrimethylsilane for the silylating agent, and acetone for the water-soluble organic solvent.

In the hydrophobing process, the pH of the aqueous solution was adjusted to approximately 5.5 by addition of acetic acid. Other conditions of the hydrophobing process including the concentration of the silylating agent and the ratio of water to acetone were identical with those of Example 1. After the hydrophobing process, the wet silica gel was dried at the temperature of 140°C in the atmosphere having the pressure of 1.2 MPa.

The observed density of the resulting dried silica gel was 160 kg/m³. The dried silica gel of Example 6 had the lower density than that of Example 1, which was dried with hot blast under the atmospheric pressure. This is because the high pressure in the drying process raises the boiling point of the liquid contained in the pores of the wet silica gel and lowers the surface tension.

### Example 7

The wet silica gel of Example 7 was obtained by replacing acetone contained in the pores of the hydrophobic wet silica gel of Example 1 with ethanol. The wet silica gel was dried under the pressurized conditions. Nitrogen was used as the pressurized gas.

The pressure of the atmosphere in the drying process was regulated to be not lower than (P₀ + 0.1)MPa but not higher than {P₀ + 0.4(P_{c}-P₀)}MPa, and the temperature of the atmosphere was regulated to be not lower than (T_{bp} + 30)°C but not higher than {T_{bp} + 2/3(T_{c}-T_{bp})}°C.

Here the atmospheric pressure (P₀) is 0.1013 MPa and the critical pressure (P_{c}) of ethanol is 6.22 MPa. Ethanol has the boiling point (T_{bp}) of 73.82°C and the critical temperature (T_{c}) of 240.75°C.

The hydrophobic wet silica gel obtained in Example 1 was soaked in ethanol to replace the liquid kept in the pores of the wet silica gel with ethanol. The wet silica gel containing ethanol in the pores thereof was soaked in ethanol in the heating vaporization unit 10 of the drying apparatus shown in Fig. 4. After the outlet to the condenser 11 was closed, the heating vaporization unit 10 was heated and simultaneously a flow of nitrogen was introduced into the heating vaporization unit 10 via the pressurized gas supply conduit 9. Through this procedure, the pressure and the temperature of the atmosphere in the heating vaporization unit 10 were regulated to be within the ranges specified above.

Then, the outlet to the condenser 11 was opened to flow the alcohol vapor in the heating vaporization unit 10 into the condenser 11. During this process, the flow rate of the pressurized gas and the heating amount in the heating vaporization unit 10 were adjusted to keep the above pressure and temperature ranges.

The drying process was carried out within the pressure range and the temperature range specified above and more specifically under the two different conditions given below to obtain two dried gels:

### (Condition a)

Temperature:104 to 114°C
   (T_{bp} + 30) to (T_{bp} + 40)°C
Pressure:0.2 to 0.3 MPa
   (P₀ + 0.1) to (P₀ + 0.2) MPa

### (Condition b)

Temperature:175 to 185°C
   {T_{bp} + 2/3(T_{c}-T_{bp}) - 10} to {T_{bp} + 2/3(T_{c}-T_{bp})}°C
Pressure:2.35 to 2.55 MPa
   {P₀ + 0.4(P_{c}-P₀) - 0.2} to {P₀ + 0.4(P_{c}-P₀)} MPa

In order to evaluate the degree of contraction, the density was measured for the resulting two dried gels. The observed densities of the gels dried under (Condition a) and under (Condition b) were respectively 300 kg/m³ and 180 kg/m³.

### Reference Example 1

The wet silica gel of Example 1 was dried under the three different conditions given below to obtain three dried gels:

### (Condition c)

Temperature: 73 to 83°C
Pressure: 0.10 MPa

### (Condition d)

Temperature: 175 to 185°C
Pressure: 0.10 MPa

### (Condition e)

Temperature: 220 to 230°C
Pressure: 5.00 to 5.25 MPa

The density was measured for the resulting three dried gels in the same manner as Example 1. The observed densities of the gels dried under (Condition c), under (Condition d), and under (Condition e) were respectively 360 kg/m³, 340 kg/m³, and 170 kg/m³.

The drying process under (Condition 1) of the present invention gave the dried gels of the lower density, compared with the dried gels of Reference Example 1 under (Condition c) and (Condition d).

While the temperature in the heating vaporization unit significantly rises from (Condition c) to (Condition d), the resulting dried gels have similar observed densities. This is because the actual vaporization proceeds at the temperature close to the boiling point, which depends upon the pressure of the atmosphere, regardless of the temperature increase of the atmosphere in the heating vaporization unit.

The (Condition e) gave the dried silica gel having the lower density. The pressure was, however, heightened to almost 2.5 times. This significantly increases the danger in the drying process.

Also, the higher temperature results in the shorter time required for the drying process. For example, the time required for drying the wet silica gel under (Condition a) is less than half the time required under (Condition c).

As clearly understood from these results, Examples of the present invention gave the dried gels having less contraction in the atmosphere of the low pressure. This is because regulation of the pressure and the temperature to the above specific ranges before an abrupt increase in vapor pressure effectively lowers the surface tension and enables the drying process to be carried out under the conditions of the small capillary force.

### Example 8

Example 8 used the wet silica gel obtained in the same manner as Example 7 and nitrogen as the pressurized gas in the drying process. The drying process was carried out in the specific ranges satisfying Conditions 2 given previously.

More specifically the following conditions were adopted:

### (Condition f)

Temperature:147 to 157°C
   {T_{bp} + 1/2(T_{c}-T_{bp}) - 10} to {T_{bp} + 1/2(T_{c}-T_{bp})}°C
Pressure:1.43 to 1.63
   {P₀ + 0.25(P_{c}-P₀) - 0.2} to {(P₀ + 0.25(P_{c}-P₀)} MPa

The density of the resulting dried gel was measured in the same manner as Example. The observed density was 200 kg/m³.

The resulting dried gel has the observed density equivalent to that of Example 7, whereas the pressure decreases to almost half the level of Example 1 to significantly enhance the safety.

### Example 9 and Reference Example 2

In Example 9, the wet silica gel containing a liquid, which had the surface tension of not greater than 0.016 N/m at the boiling point, was dried under the pressurized conditions. The liquid was hexane (the surface tension at the boiling point was 0.0134 N/m). The wet silica gel used here was a wet silica gel having the modified structure with a hydrophobic group. The wet silica gel was prepared from tetramethoxysilane as the material. The drying process was carried out under (Condition 2). The pressurized gas used here as steam obtained by heating water.

The wet silica gel was obtained in the following manner. Then, tetraethoxysilane, ethanol and 0.1N aqueous ammonia were mixed at the molar ratio of 1 : 5 : 4 (the molar ratio of aqueous ammonia was based on the molar number of water) with stirring, and the obtained solution mixture was left to prepare a wet silica gel containing water and ethanol in the pores thereof. The resulting gel was soaked in an acetone solution containing 5% by weight of trimethylchlorosilane for 8 hours for hydrophobing. Then, the liquid in the pores was replaced with hexane to remove trimethylchlorosilane and HCl. The resulting wet silica gel was dried under the following conditions and the density of the dried silica gel was measured in the same manner as Example 7:

### (Condition g)

Temperature:142 to 152°C
   {T_{bp} + 1/2(T_{c}-T_{bp}) - 10} to {T_{bp} + 1/2(T_{c}-T_{bp})}°C
Pressure:0.66 to 0.86 MPa
   {P₀ + 0.25(P_{c}-P₀) - 0.2} to {P₀ + 0.25(P_{c}-P₀)} MPa

Here the atmospheric pressure (P₀) is 0.1013 MPa and the critical pressure (P_{c}) of hexane is 3.05 MPa. Hexane has the boiling point (T_{bp}) of 68.7°C and the critical temperature (T_{c}) of 234.15°C.

In Reference Example 2, hexane in the pores of the wet silica gel of Example 9 was replaced with pure acetone (having the surface tension of 0.0200 N/m at the boiling point of 56.12°C), and the wet silica gel was dried the solvent-substituted wet silica gel under the same conditions as Example 9 (142 to 152°C and 0.66 to 0.86 MPa), and the density of the resulting dried gel was measured.

The observed density of the resulting dried gel of Example 9 was 200 kg/m³, and that of the dried gel of Reference Example 2 was 280 kg/m³. The lower density in the case of using hexane may be ascribed to that hexane having the especially low surface tension decreases the capillary force and effectively prevents contraction.

Example 9 ensured easy separation of hexane from water in the condenser for recycle, whereas Reference Example 2 did not enable the recycle of acetone since acetone was completely mixed with water.

### Example 10

In Example 10, the wet silica gel containing a linear hydrocarbon of a high boiling point in the pores thereof was dried. The hydrocarbon of the high boiling point was nonane (boiling point: 150.80°C).

The procedure of Example 10 soaked the hydrophobic wet silica gel of Example 9 in nonane to replace the liquid in the pores of the wet silica gel with nonane. The resulting wet silica gel was dried under the following conditions and the density of the dried silica gel was measured in the same manner as Example 7:

### (Condition h)

Temperature:226 to 236°C
   {T_{bp} + 1/2(T_{c}-T_{bp}) - 10} to {T_{bp} + 1/2(T_{c}-T_{bp})}°C
Pressure:0.46 to 0.66 MPa
   {P₀ + 0.25(P_{c}-P₀) - 0.2} to (P₀ + 0.25(P_{c}-P₀)} MPa

Here the atmospheric pressure (P₀) is 0.1013 MPa and the critical pressure (P_{c}) of nonane is 2.32 MPa. Nonane has the boiling point (T_{bp}) of 150.80°C and the critical temperature (T_{c}) of 321.45°C.

The observed density of the resulting dried gel was 190 kg/m³, which was a little lower than that of Example 9. The pressure in the drying process was reduced by 20 to 30% to enhance the safety in the manufacturing process. This may be ascribed to that nonane having the greater number of carbons but the lower critical pressure lowers the vapor pressure curve as a whole.

### Example 11

In Example 11, the wet silica gel was supplied in the form of slurry, vaporization was carried out under the pressurized and heated conditions, and the liquid vapor was removed under the reduced pressure.

The procedure of Example 11 used the wet silica gel of Example 9 containing hexane in the pores thereof and prepared the slurry by crushing the wet silica gel and adding 3-fold hexane by the volume ratio.

The procedure is described more in detail with Fig. 5. The slurry was supplied by the pump under the pressure of 0.9 MPa through the slurry gel supply conduit 12. The temperature of the slurry was regulated to 150 to 170°C by heating the heating vaporization unit 14. The vaporization was practically concluded in the middle of the heating vaporization unit 14. The volume expansion as a result of the vaporization caused the slurry to move to the dried gel collector unit 15 at a high speed. The dried gel collector unit 15 was evacuated with a vacuum pump via the condenser 16. The inside of the dried gel collector unit 15 and the adjoining part of the heating vaporization unit 14 were thus kept in the reduced pressure, so as to remove the liquid vapor and collect the dried gel on the bottom thereof.

The temperature of the dried gel collector unit 15 was regulated to be 80°C at the lowest, which is higher than the boiling point of hexane. The dried gel was taken out of a dried gel outlet 17 provided in the lower portion of the dried gel collector unit 15 at appropriate intervals under the reduced pressure. In the procedure of Example 11, the wet silica gel was thus continuously dried with a continuous flow of the supply of slurry.

The observed density of the resulting dried gel was 210 kg/m³. This shows the effect of preventing the contraction equivalent to Example 9. The supply in the form of the slurry enables the flow processing. The procedure of Example 11 does not use the pressurized gas nor require the space for flowing and storing a large quantity of the pressurized gas.

Further, in this Example, the pressurized gas was not supplied through the pressurized gas supply conduit 13. Steam, nitrogen, or carbon dioxide may be supplied as the pressurized gas for the purpose of regulating the pressure.

### Example 12 and Comparative Example 3

In Example 12, the dried gel obtained in Example 9 was crushed to particles and the crushed particles were charged into a polypropylene container having the dimensions of 22×150×150 mm and the wall thickness of lmm to obtain a heat insulating and sound absorbing panel. The particle diameter of the dried gel was not greater than 1 mm. The heat insulating property and the sound absorbing property of the resulting panel as well as their time variations were measured.

In a similar manner, a reference panel filled with glass wool was prepared, and the heat insulating property and the sound absorbing property of the reference panel and their time variations were measured.

The heat insulating property was evaluated by measuring the thermal conductivity by the parallel plates method. The panel filled with the dried gel had the smaller thermal conductivity by approximately 40%. The thermal conductivity of the panel filled with the glass wool increased with time, so that the difference increased.

The sound absorbing property was evaluated by measuring the acoustic penetrability loss at 100 Hz. Example 12 and Comparative Example 3 showed similar values. The sound absorbing property of the glass wool panel showed deterioration with time.

Whereas the performances of the glass wool panel deteriorated with time, the performances of the dried gel panel did not have any significant change. This is because the excellent hydrophobicity of the dried gel effectively prevents invasion of water.

It was rather difficult to pack the glass wool into the narrow container, whereas the packing of the dried gel was easy. The dried gel used here was obtained by the drying method of the present invention and was thus manufactured at low cost.

As described above, the method of drying the wet silica gel according to the present invention does not carry out the solvent substitution process but directly causes the silylating agent to react with the silanol group on the wet silica gel in a water-containing solution for hydrophobing. The method then dries the hydrophobic wet silica gel under the temperature and pressure conditions lower than the critical point.

This arrangement does not require any specific equipment including a pressure vessel used in the supercritical drying method, and thus advantageously reduces the cost required for the equipment. The prior art drying method other than the supercritical drying method requires the solvent substitution process to enable the water-insoluble silylating agent to enter the wet silica gel. The method of the present invention does not require this solvent substitution process and thus advantageously shortens the total processing time.

The method of the present invention carries out the hydrophobing process in an aqueous solution of methanol, ethanol, propanol, tert-butyl alcohol, or acetone. This simplifies the drying process and reduces the total manufacturing cost.

The method of the present invention may carry out the hydrophobing process in an aqueous solution of n-propyl alcohol. This effectively prevents an increase in surface tension during the drying process and gives dried silica gel of the low density.

The method of the present invention may add a surface active agent in the drying process to lower the surface tension and prevent contraction, thus obtaining dried silica gel of the lower density.

Drying the wet silica gel in the pressurized atmosphere effectively lowers the surface tension and prevents the contraction, so as to give dried silica gel of the low density.

The method of the present invention may dry the wet silica gel under the pressurized condition. In this case, the heating degree is regulated in the specific range that does not cause an abrupt increase in pressure. This arrangement lowers the surface tension and the capillary force in the course of vaporizing the liquid kept in the pores of the wet silica gel, thus effectively preventing contraction of the dried silica gel with a minimum pressure increase. An inert gas, such as nitrogen, carbon dioxide, or stem, is used as the pressurized gas in the drying process. This ensures the incombustibility and enhances the safety. The supply of the wet silica gel in the form of the slurry allows the flow processing and improves the efficiency of production. Application of the dried gel obtained by the drying method of the present invention for the heat insulating panel and the sound absorbing panel advantageously reduces the manufacturing cost. The particles of the dried gel are readily packed in the heat insulating panel and the sound absorbing panel. This ensures the high efficiency of production.

Application of the hydrophobic dried silica gel for the heat insulating panel and the sound absorbing panel enhances the durability of these panels.

The present invention is directed to a method of drying a wet silica gel containing water in a pore thereof comprising the steps of: silylating the wet silica gel in a water-soluble solvent to obtain hydrophobic wet silica gel; and drying the hydrophobic wet silica gel in an atmosphere having temperature and pressure of lower than a critical point of a liquid contained in the pores of the wet silica gel. Such a drying method effectively dries the wet silica gel without carrying out the time- and labor-consuming substitution of a solvent in the hydrophobing process.

## Claims

1. A method of drying a wet silica gel containing water in a pore thereof, comprising the steps of:
(a) silylating a wet silica gel in a water-soluble solvent to obtain a hydrophobic wet silica gel; and
(b) drying said hydrophobic wet silica gel in an atmosphere having a temperature and a pressure of lower than a critical point of a liquid contained in the pore of said wet silica gel.

2. The method in accordance with claim 1, wherein said water-soluble solvent comprises at least one selected from the group consisting of methanol, ethanol, propanol, tert-butyl alcohol, and acetone.

3. The method in accordance with claim 2, wherein said water-soluble solvent comprises n-propyl alcohol.

4. The method in accordance with claim 1, wherein said water-soluble solvent comprises a surface active agent.

5. The method in accordance with claim 1, further comprising a step of substituting a solvent after said hydrophobing step (a) but before said drying step (b).

6. The method in accordance with claim 1, wherein said step (b) comprises the steps of:
(b1) regulating the pressure of the atmosphere to be not lower than (P₀ + 0.1)MPa but not higher than {P₀ + 0.4(P_{c}-P₀)}MPa, where P₀ represents the atmospheric pressure and P_{c} represents the critical pressure of the liquid; and
(b2) regulating the temperature of the atmosphere to be not lower than (T_{bp} + 30)°C but not higher than {T_{bp} + 2/3(T_{c}-T_{bp})}°C, where T_{bp} represents the boiling point of the liquid and T_{c} represents the critical temperature of the liquid.

7. The method in accordance with claim 6, wherein said step (b1) regulates the pressure of the atmosphere to be not lower than (P₀ + 0.4)MPa but not higher than {P₀ + 0.25(P_{c}-P₀)}MPa, and said step (b2) regulates the temperature of the atmosphere to be not lower than (T_{bp} + 50)°C but not higher than {T_{bp} + 1/2(T_{c}-T_{bp})}°C.

8. The method in accordance with claim 6, wherein a pressurized inert gas is used to regulate the pressure.

9. The method in accordance with claim 8, wherein said inert gas includes at least one of nitrogen and carbon dioxide.

10. The method in accordance with claim 6, wherein a supply of steam is fed to regulate the pressure and the temperature.

11. The method in accordance with claim 6, wherein said liquid has a surface tension of not greater than 0.016 N/m at the boiling point.

12. The method in accordance with claim 11, wherein said liquid includes either one of pentane and hexane as a primary component.

13. The method in accordance with claim 6, wherein said liquid includes either one of a linear hydrocarbon compound having a boiling point of not lower than 120°C and a siloxane compound having a boiling point of not lower than 90°C as a primary component.

14. The method in accordance with claim 6, wherein said step (b) comprises the steps of:
(b3) pressurizing said wet silica gel in the state of slurry to vaporize the liquid contained in the pores of the wet silica gel and obtain a substantially dried body of the silica gel;
(b4) conveying said substantially dried body of the silica gel to a dried gel collector unit by utilizing a volume expansion of the liquid due to the vaporization; and
(b5) reducing pressure of an atmosphere in said dried gel collector unit to be not higher than the atmospheric pressure, so as to remove the liquid vapor.

15. A heat insulating panel comprising a dried silica gel prepared according to a method in accordance with claim 6.

16. A sound absorbing panel comprising a dried silica gel prepared according to a method in accordance with claim 6.
